**Europäisches Patentamt**

**European Patent Office**

**Office européen des brevets**

(19)

(11) Veröffentlichungsnummer : **0 377 408 B1**

(12)

# EUROPÄISCHE PATENTSCHRIFT

(45) Veröffentlichungstag der Patentschrift :
**01.09.93 Patentblatt 93/35**

(51) Int. Cl.$^5$ : **C04B 35/58**

(21) Anmeldenummer : **89810969.9**

(22) Anmeldetag : **21.12.89**

(54) **Verfahren zur Herstellung von Siliziumnitrid-Formkörpern.**

(30) Priorität : **04.01.89 CH 16/89**

(43) Veröffentlichungstag der Anmeldung :
**11.07.90 Patentblatt 90/28**

(45) Bekanntmachung des Hinweises auf die
Patenterteilung :
**01.09.93 Patentblatt 93/35**

(84) Benannte Vertragsstaaten :
**CH DE ES FR GB IT LI SE**

(56) Entgegenhaltungen :
**FR-A- 2 337 702**
**GB-A- 1 364 716**

(73) Patentinhaber : **HTM AG**
**Jurastrasse 59**
**CH-2503 Biel (CH)**

(72) Erfinder : **Hofer, Beat**
**Steinmattstrasse 25**
**CH-4552 Derendingen (CH)**
Erfinder : **Einstein, Bernhard**
**Schützenstrasse 57/24**
**CH-3627 Heimberg (CH)**

## Beschreibung

Die vorliegende Erfindung betrifft ein Verfahren zur Herstellung von Formkörpern aus reaktionsgebundenem Siliziumnitrid. Als Ausgangsmaterial dient Pulver aus reinem Silizium oder ein Pulvergemisch aus reinem Silizium, das Siliziumnitrid enthält. Das Ausgangsmaterial wird unter Stickstoffdruck einer Erwärmung ausgesetzt.

Die Herstellung von solchem reaktionsgebundenem Siliziumnitrid ist schon seit längerer Zeit bekannt. $Si_3N_4$ besitzt eine aussergewöhnliche Temperaturwechsel-Beständigkeit, eine hohe Festigkeit und Korrosionsbeständigkeit. Dieses keramische Material findet deshalb in der Industrie als Hartstoff für Gaseinleitungsrohre, für Chlor, Giessdüsen, Turbinenbauteile, für Dichtungsleisten von Wankelmotoren und Fahrzeugturbinen etc. Verwendung.

Die starke Exothermie der Nitridierungsreaktion (9,3 kJ/kg) beschränkt die Herstellung von Bauteilen mit Wandstärken von grösser als 10 mm. Je dicker das Formstück wird, desto mehr Wärme entsteht. Dies kann leicht zu Temperaturen führen, die oberhalb des Schmelzpunktes von Silizium (1423°C) liegen. Dadurch kommt es im Innern des Formstückes zu Aufschmelzungen von Silizium. Die flüssigen Siliziumkörner backen zusammen und bilden eine feste, zusammenhängende Phase, die sich nicht mehr nitridieren lässt.

Wird zur Verhinderung dieser Schmelzphase eine tiefere Reaktionstemperatur gewählt, nitridieren nur die Randzonen zu 100 %. Da die Reaktionen mit einer Anreicherung von $N_2$ verbunden ist, wächst das Volumen in der ersten Reaktionszone (Randzone) am stärksten und behindert die weitere Diffusion von Stickstoff in das Innere. Die Siliziumkörner in der Mitte erhalten nicht mehr genügend Stickstoff, um vollkommen zu $Si_3N_4$ zu nitridieren. Es bilden sich Phasen von freiem Silizium und unterstöchiometrischen Si-N-Verbindungen.

Es wurde deshalb versucht mit höheren $N_2$-Drücken eine vollständige Nitridierung der Formkörper zu erhalten.

In der JP-Patentanmeldung 78/143,934 (Patent 1980/71672) wird ein Verfahren zur Herstellung von Metallnitrid-Formmassen beschrieben, worin Metallpulver, z.B. Siliziumpulver, in eine bestimmte Form vorgeformt wird und in Stickstoffgas gesintert wird, wobei die vorerwähnte, vorgeformte Masse in einem Hochdruckbehälter bei hoher Temperatur und unter Hochdruck mit Stickstoffgas zur Reaktion gebracht wird. Um eine genügende Wirkung zu erzielen, wird für das $N_2$-Gas ein Druck von mindestens 4,91 MPa (50 kg/cm²) empfohlen. Optimal wird jedoch 29,43 MPa (300 kg/cm²) und mehr empfohlen, um eine signifikante Wirkung zu erhalten. Die Temperaturen zur Nitridierung liegen zuerst unter dem Schmelzpunkt des zu nitridierenden Metallpulvers und in einer zweiten Reaktion oberhalb dieses Schmelzpunktes. Als Ausgangsmaterial wurde Siliziumpulver mit einer Korngrösse von 100 mesh (ca. 149 µm) gewählt.

In der EP-A-0,199,297 wird ein Verfahren zur Herstellung von Formkörpern aus reaktionsgebundenem Siliziumnitrid beschrieben, worin mit einem Stickstoffgasdruck von mindestens 6 MPa nitridiert wird und die Temperatur in einer ersten Stufe auf eine Temperatur von unterhalb des Schmelzpunktes von Silizium erhöht wird und die Temperatur in einer zweiten Stufe auf eine Temperatur oberhalb ds Schmelzpunktes von Silizium erhitzt wird. In der ersten Stufe wird die Temperatur mindestens 0,5 h gehalten, während die höhere Temperatur in der zweiten Stufe während 1 bis 7 h gehalten wird. Als Ausgangsmaterialien dienen Pulver mit einer Teilchengrösse von 5 bis 15 µm.

In der CH-A-654,564 wird ein Verfahren beschrieben, worin Formkörper aus Siliziumnitrid hergestellt werden, indem bei einem Stickstoffdruck von mindestens 100 bar und einer Temperatur von mindestens 1200°C nitridiert wird. Als Ausgangsmaterial diente Si-Pulver mit Korngrössen von kleiner als 30 µm.

In der FR-A-2,337,702 ist ein Verfahren zur Herstellung von Siliziumnitrid beschrieben, worin durch Vorsinterung von Siliziumpulver bei einer Temperatur zwischen 1250°C und einer Temperatur unterhalb des Schmelzpunktes von Silizium ein Grünkörper hergestellt wird. Dieser Grünkörper wird anschliessend bei einem Stickstoffdruck unter- oder oberhalb des Atmosphärendruckes und einer Temperatur zwischen 1100°C und einer Temperatur unterhalb des Schmelzpunktes von Silizium umgesetzt, wobei ein polykristalliner Siliziumnitridkörper erhalten wird, mit einer Dichte von 79 % bis 92 % der theoretischen Dichte von Siliziumnitrid. Im erhaltenen Siliziumnitrid ist bis zu 10 Vol.-% Silizium enthalten. Die angegebene Zykluszeit ist in der Regel weit über 24 h und die Formung des Grünkörpers erfolgt in der Regel in einer Argonatmosphäre.

Alle die obenerwähnten bekannten Verfahren weisen den Nachteil auf, dass bei einer Zykluszeit von weniger als 24 h nur Formstücke mit einer maximalen Wandstärke von 10 mm hergestellt werden können. Experimente haben bewiesen, dass Stücke, die nach diesen Verfahren hergestellt wurden und eine Wandstärke von weniger als 10 mm aufweisen, im Innern nicht voll durch nitridieren und bei Wandstärken von grösser als 10 mm wegen der starken exothermen Reaktion im Innern eine zusammenhängende Si-Schmelzphase aufweisen, die sich nicht mehr nitridieren lässt.

Aufgabe der vorliegenden Erfindung ist es demzufolge, ein neues Verfahren zur Verfügung zu stellen, das es erlaubt, Formkörper mit Wandstärken von mehr als 10 mm problemlos zu nitridieren und zwar mit einem Nitridierungsgrad von 92 bis 100 %.

Gegenstand der vorliegenden Erfindung ist demzufolge das im Patentanspruch 1 definierte Verfahren.

Der Erfindung liegt die Erkenntnis zugrunde, dass im Innern des Körpers keine Temperaturen herrschen dürfen, die grösser sind als der Schmelzpunkt von Silizium, nämlich 1423°C, und dass die porösen Randzonen in der Anfangsphase der Reaktion sich nicht schliessen dürfen, um die weitere Diffusion des Stickstoffes in das Innere des Formkörpers nicht zu behindern.

Der Beginn der Reaktion muss bei der minimalen Ofentemperatur von etwa 1000°C einsetzen. Die Reaktionsgeschwindigkeit wird primär durch eine genaue Druckführung im Autoklaven gesteuert, um ein Ueberhitzen des Siliziums zu vermeiden. Erst bei fortgeschrittener Reaktion wird die Ofentemperatur erhöht und damit die Reaktionsgeschwindigkeit zusätzlich mit der Ofentemperatur gesteuert.

Um die Zykluszeit und Reaktionszeit so kurz wie möglich zu halten, ist das Verhältnis der Aufheizzeiten zu den Haltezeiten im Bereich 1:1,8 bis 2,2 einzustellen. Die Druck- und Temperaturerhöhung erfolgt dabei in 5 - 15 Stufen. Wichtig ist, dass der Beginn der Reaktion bei einer punktförmig gemessenen Ofentemperatur von mindestens 1000°C einsetzt und die Reaktionsgeschwindigkeit vorerst durch den Druck gesteuert wird, und erst bei fortgeschrittener Reaktion die Ofentemperatur und der Druck stufenweise in Intervallen von etwa 10°C bzw. etwa 0,2 MPa erhöht werden.

Als Ausgangsmaterial wird Pulver aus reinem Silizium verwendet, das eine Dichte von 1,3 bis 2,3 kg/dm$^3$ aufweist. Möglich ist es auch, dem reinen Si-Pulver $Si_3N_4$-Pulver im Bereich 1 - 30 Gew. % beizumischen, um die erste exotherme Reaktion zwischen Si und $N_2$ von der Wärmeentwicklung her zu reduzieren. Aus der gleichen Ueberlegung heraus können auch andere Pulver auf der Basis Nitride oder Oxide beigemischt werden. Zusätzlich können mit diesen Beimischungen auch die physikalischen Eigenschaften des Materials gezielt verändert werden. Normalerweise betragen die Korngrössen dieser Pulverbeimischungen nicht mehr als 15 $\mu$m. Die Beachtung all dieser Punkte erlaubt es, die Zykluszeit minimal zu halten.

Im folgenden Beispiel wird das erfindungsgemässe Verfahren näher erläutert.

## Beispiel 1

Siliziumpulver mit einer mittleren Korngrösse <20$\mu$m wurde mit einer kaltisostatischen Presse zu Platten mit den Abmessungen (mm)

        260 x 130 x 10
        260 x 130 x 18
        260 x 130 x 25
        260 x 130 x 30

gepresst. Derart hergestellte Platten wurden aufeinandergestapelt, wobei zwischen den einzelnen Platten Abstände von mindestens 2 mm herrschen. Damit wird die Wärmeabfuhr bei der exothermen Reaktion gewährleistet. Eine derart vorbereitete Charge wurde in eine HIP-Anlage eingebracht, die unter leichtem Stickstoffdruck auf eine erste Reaktionstemperatur von 1040°C gebracht wurde. Der Stickstoffdruck betrug bei dieser Temperatur 1 MPa (10 bar).

Anschliessend wurden der Druck und die Temperatur stufenweise 1,0 bis 4,9 MPa (10 bis 49 bar) und 1040 bis 1400°C erhöht. Das gemeinsame Erhöhen von Druck und Temperatur ergab eine kontrollierte, gleichmässige Reaktion in allen Plattenabmessungen. Nach maximal 10 h war die Reaktion komplett abgeschlossen. Nach dem Auspacken der Teile konnten Nitridierungsgrade von 92 bis 100 % ermittelt werden. Die Dichten: betrugen 2,0 kg/dm$^3$ bis 2,3 kg/dm$^3$.

## Beispiel 2

Siliziumpulver mit einer mittleren Korngrösse <15 $\mu$m wurde mit $Si_3N_4$-Pulver mit einer mittleren Korngrösse <15 $\mu$m im Verhältnis 9:1 und 8:2 gemischt. Diesem Pulver wurden Zusätze von je 3 bis 10 Gew.-% $Al_2O_3$ und $Y_2O_3$ beigegeben. Derart gemischtes Pulver wurde mit einer kaltisostatischen Presse zu Platten mit den Abmessungen (mm)

        260 x 130 x 10
        260 x 130 x 18
        260 x 130 x 25
        260 x 130 x 30

gepresst und anschliessend mit den gleichen Bedingungen in der heissisostatischen Presse behandelt, wie in Beispiel 1 angegeben.

Die derart hergestellten nitridierten Formplatten wiesen Dichten von >2,3 bis 3,0 auf und haben einen Nitridierungsgrad von >95 %.

Beispiel 3

Si-Pulver mit einer mittleren Korngrösse von <15 μm wurde mit einem Bornitridpulver mit einer mittleren Korngrösse <15 μm im Verhältnis (mm)

1 : 9
3 : 7
1 : 1

gemischt und anschliessend zu-Zylindern mit einem Durchmesser von 60 mm und einer Länge von 100 mm kaltisostatisch gepresst. Diese Zylinder wurden in die HIP-Anlage gelegt und unter den gleichen Bedingungen, wie in Beispiel 1 aufgeführt, behandelt. Messungen ergaben, dass das Si-Pulver vollständig nitridierte und ein zusammenhängendes Netzwerk ergab, in dem das Bornitrid eingebunden wurde. Mit steigendem Si-Gehalt stieg die Festigkeit des Körpers an.

Der Ablauf des Zyklusses zum Nitrieren von Si-Körpern gemäss den obenstehenden Beispielen kann gemäss den nachstehenden Tabellen 1 bis 3 durchgeführt werden.

Tabelle 1

| Segment | Aufheiz-zeit (min) | Aufheizen bis Temp. (°C) | Haltezeit (min) | Halte-temperatur (°C) | Druck (MPa) |
|---|---|---|---|---|---|
| 1 | 70 | 1040 | 80 | 1040 | 1,0 |
| 2 | 20 | 1130 | 60 | 1130 | 1,0 |
| 3 | 10 | 1160 | 40 | 1160 | 1,0 |
| 4 | 10 | 1190 | 60 | 1190 | 1,2 |
| 5 | 10 | 1220 | 15 | 1220 | 1,5 |
| 6 | 5 | 1230 | 60 | 1230 | 2,0 |
| 7 | 5 | 1240 | 45 | 1240 | 3,0 |
| 8 | 5 | 1260 | 10 | 1240 | 4,0 |
| 9 | 5 | 1270 | 10 | 1270 | 4,9 |
| 10 | 5 | 1280 | 10 | 1280 | 4,9 |
| 11 | 70 | 1420 | 30 | 1420 | 4,9 |

Total = 635 min = 10,58 h

Tabelle 2

| Segment | Aufheiz-zeit (min) | Aufheizen bis Temp. (°C) | Haltezeit (min) | Halte-temperatur (°C) | Druck (MPa) |
|---------|--------|--------|--------|--------|--------|
| 1 | 70 | 1130 | 80 | 1130 | 0,5 |
| 2 | 10 | 1160 | 40 | 1160 | 1,0 |
| 3 | 10 | 1190 | 60 | 1190 | 1,2 |
| 4 | 10 | 1220 | 15 | 1220 | 1,5 |
| 5 | 5 | 1230 | 60 | 1230 | 2,0 |
| 6 | 5 | 1240 | 45 | 1240 | 3,0 |
| 7 | 5 | 1260 | 10 | 1240 | 4,0 |
| 8 | 5 | 1270 | 10 | 1270 | 4,9 |
| 9 | 5 | 1280 | 10 | 1280 | 4,9 |
| 10 | 70 | 1420 | 60 | 1420 | 4,9 |

Total = 585 min = 9,75 h

Tabelle 3

| Segment | Aufheiz-zeit (min) | Aufheizen bis Temp. (°C) | Haltezeit (min) | Halte-temperatur (°C) | Druck (MPa) |
|---|---|---|---|---|---|
| 1 | 50 | 1130 | 60 | 1130 | 0,5 |
| 2 | -- | -- | 50 | 1130 | 1,0 |
| 3 | 10 | 1160 | 40 | 1160 | 1,0 |
| 4 | 10 | 1190 | 30 | 1190 | 1,2 |
| 5 | 10 | 1220 | 10 | 1220 | 1,5 |
| 6 | 5 | 1230 | 10 | 1230 | 2,0 |
| 7 | 5 | 1240 | 10 | 1240 | 3,0 |
| 8 | 10 | 1280 | 10 | 1270 | 4,9 |
| 9 | 40 | 1420 | 70 | 1420 | 4,9 |

Total = 420 min = 7,0 h

## Patentansprüche

1. Verfahren zur Herstellung eines Formkörpers aus reaktionsgebundenem Siliziumnitrid, wobei als Ausgangsmaterial reines Siliziumpulver oder ein Pulvergemisch aus reinem Silizium und seinem Nitrid verwendet wird, welches durch kaltisostatisches Pressen, Schlickerguss oder Druckguss in eine gewünschte Form gebracht wird und anschliessend in einer Stickstoffatmosphäre erwärmt wird, und die Reaktion bei einem Stickstoffdruck von 0,5 - 2,0 MPa und einer Temperatur von 1000 - 1200°C eingeleitet wird, dadurch gekennzeichnet, wonach der Druck und die Temperatur zumindest teilweise stufenweise erhöht werden, auf einen Enddruck von 4,9 MPa und auf eine Endtemperatur von höchstens 1420°C, und die gesamte Zykluszeit weniger als 24 h und vorzugsweise 10 h beträgt, wobei ein Siliziumnitridkörper mit einem gleichmässigen Nitridierungsgrad von mehr als 92 % erhalten wird.

2. Verfahren nach Anspruch 1, dadurch gekennzeichnet, dass die gesamte Erhöhung des Druckes und der Temperatur stufenweise erfolgt, wobei zwischen den Stufen die Werte während einer Haltezeit konstant gehalten werden.

**3.** Verfahren nach Anspruch 1, dadurch gekennzeichnet, dass in der aus Aufheizzeiten und Haltezeiten bestehenden Zykluszeit das Verhältnis der Aufheizzeiten zu den Haltezeiten 1:1,8 bis 2,2 beträgt.

**4.** Verfahren nach Anspruch 1, dadurch gekennzeichnet, dass die Reaktionszeit 3 - 20 h und vorzugsweise 8 h beträgt.

**5.** Verfahren nach einem der Ansprüche 1 bis 4, dadurch gekennzeichnet, dass die Druck- und Temperaturerhöhung in 5 - 15 Stufen erfolgt.

**6.** Verfahren nach einem der Ansprüche 1 bis 5, dadurch gekennzeichnet, dass der Beginn der Reaktion bei einer punktförmig gemessenen Ofentemperatur von mindestens 1000°C einsetzt, die Reaktionsgeschwindigkeit vorerst durch den Druck gesteuert wird und erst bei fortgeschrittener Reaktion die Ofentemperatur und der Druck stufenweise in Intervallen von etwa 10°C bzw. etwa 0,2 MPa erhöht wird.

**7.** Verfahren nach einem der Ansprüche 1 bis 6, dadurch gekennzeichnet, dass als Ausgangsmaterial Pulver aus reinem Silizium verwendet wird, das eine Dichte von 1,3 bis 2,3 kg/dm$^3$ aufweist.

**8.** Verfahren nach einem der Ansprüche 1 bis 7, dadurch gekennzeichnet, dass als Ausgangsmaterial Siliziumpulver verwendet wird, das 1 - 30 Gew.-% und vorzugsweise 20 Gew.-% $Si_3N_4$ enthält.

**9.** Verfahren nach einem der Ansprüche 1 bis 8, dadurch gekennzeichnet, dass den Ausgangsmaterialien zusätzlich Nitride und Oxide beigemischt werden.

**10.** Verfahren nach einem der Ansprüche 1 bis 9, dadurch gekennzeichnet, dass die Ausgangsmaterialien eine Teilchengrösse von weniger als 15 µm aufweisen.

**11.** Verfahren nach einem der Ansprüche 1 bis 10, dadurch gekennzeichnet, dass die Formkörper Platten oder Zylinder mit Wandstärken von mehr als 10 mm sind.

## Claims

**1.** A method of producing a molded article of reactively combined silicon nitride comprising:
- bringing pure silicon powder or a powder mixture of pure silicon and its nitride into a desired shape having a thickness of greater than 10 mm through cold isostatic pressing, slip casting or die-casting;
- heating the obtained body in a nitrogen atmoshere, reacting the body with nitrogen starting at a nitrogen pressure of 0.5-2.0 MPa and a temperature of 1000°C;
- raising the temperature and the pressure at least in part step-by-step to a final pressure of 4.9 MPa and a final temperature of at most 1420°C for a reaction time to obtain said molded article of silicon nitride with a uniform degreee of nitriding of at least 92 %;
- the entire cycle time of said process without cooling being less than 24 hours and preferably 8 hours.

**2.** The method of claim 1, wherein the whole raising of the pressure and the temperature takes place step-by-step, the pressure and temperature values being kept constant during a pause between steps.

**3.** The method of claim 2, wherein the ratio of the heating periods to the pause amounts to 1:1.8 to 2.2.

**4.** The method of claim 1, wherein the reaction time amounts to 3 - 20 hours preferably 8 hours.

**5.** The method of claim 1 - 4, wherein the raising of pressure and temperature takes place in 5 - 15 steps.

**6.** The method of claim 1 - 5, wherein the reaction starts at a furnace temperature of at least 1000°C, the reaction rate controlled first by the pressure, and the furnace temperature an pressure being raised by intervals of about 10°C or about 0.2 MPa, respectively, only when the reaction is advanced.

**7.** The method of claim 1 - 6, wherein said pure silicon powder has a density of 1.3 to 2.3 kg/dm$^3$.

**8.** The method of claim 1 - 7, wherein said powder mixture of pure silicion and its nitride contains 1-30 % by

weight of $Si_3N_4$ preferably 20 % by weight of $Si^3N^4$.

9. The method of claim 1 - 8, wherein further nitrides and oxides are added to said silicon powder or powder mixture.

10. The method of claim 1 - 9, wherein said silicon powder or powder mixture has a particle size of less than 15 microns.

11. The method of claim 1 - 10, wherein the desired shape having a thickness of greater than 10 mm.

## Revendications

1. Procédé de fabrication d'un corps en nitrure de silicium lié par réaction, selon lequel le matériau de départ utilisé est de la poudre de silicium pur ou un mélange poudreux de silicium pur et de son nitrure, qui est amené à la forme souhaitée par compression isostatique à froid, coulée en barbotine ou moulage sous pression et est ensuite réchauffé dans une atmosphère d'azote, la réaction étant amorcée à une pression d'azote de 0,5 à 2,0 MPa et à une température de 1000°C à 1200°C et caractérisée par le fait que la pression et la température sont élevées, du moins en partie, par paliers pour atteindre une pression finale de 4,9 MPa et une température finale de 1420°C au plus et que la durée totale du cycle est inférieure à 24 heures et est de préférence de 10 heures, pour former un corps en nitrure de silicium présentant un degré de nitruration régulier supérieur à 92%.

2. Procédé selon la revendication 1 caractérisé en ce que l'élévation totale de la pression et de la température a lieu par paliers, les valeurs entre les paliers étant gardées constantes pendant un temps de maintien.

3. Procédé selon la revendication 1 caractérisé en ce que dans le cycle constitué de temps de chauffe et de temps de maintien, le rapport entre les temps de chauffe et les temps de maintien est de 1/1,8 à 2,2.

4. Procédé selon la revendication 1 caractérisé en ce que le temps de réaction est de 3 à 20 heures, et de préférence de 8 heures.

5. Procédé selon l'une des revendications 1 à 4 caractérisé en ce que l'élévation de la pression et de la température comporte 5 à 15 paliers.

6. Procédé selon l'une des revendications 1 à 5 caractérisé en ce que le début de la réaction a lieu à une température du four mesurée ponctuellement d'au moins 1000°C, que la vitesse de réaction est d'abord commandée par la pression et que la température du four et la pression ne sont élevées par paliers d'environ 10°C ou d'environ 0,2 MPa que lorsque la réaction est à un stade avancée.

7. Procédé selon l'une des revendications 1 à 6 caractérisé en ce que le matériau de départ utilisé est une poudre de silicium pur présentant une densité de 1,3 à 2,3 kg/dm³.

8. Procédé selon l'une des revendications 1 à 7 caractérisé en ce que le matériau de départ utilisé est une poudre de silicium qui contient de 1 à 30% en poids, et de préférence 20% en poids, de $Si_3N_4$.

9. Procédé selon l'une des revendications 1 à 8 caractérisé en ce que des nitrures et des oxydes sont mélangés aux matériaux de départ.

10. Procédé selon l'une des revendications 1 à 9 caractérisé en ce que les matériaux de départ présentent une granulométrie inférieure à 15μm.

11. Procédé selon l'une des revendications 1 à 10 caractérisé en ce que les corps formés sont des plaques ou des cylindres dont les épaisseurs de paroi sont supérieures à 10 mm.